# EUROPEAN PATENT APPLICATION

(11) **EP 4 629 136 A1**
(43) Date of publication of application: **08.10.2025**
(21) Application number: 25168117.7
(22) Date of filing: 02.04.2025
(51) Int. Cl.: G06K 19/00, G06K 19/077, G06K 19/08, A47B 96/20, B23K 26/00, B27D 5/00, B27M 1/00, B41J 2/00, B41M 5/00, G05B 19/418

(54) **METHOD FOR IDENTIFYING AND TRACING PANELS FOR FURNITURE**

(30) Priority: 05.04.2024 IT 202400007609
(71) Applicant: Motta, Giuseppina, 21100 Milano (MI) (IT); Motta, Gianluigi, 22060 Carugo (CO) (IT); Valtorta, Davide, 22066 Mariano Comense (CO) (IT)
(72) Inventor: MOTTA, Gianluigi, Carugo (CO) (IT)
(74) Representative: Metroconsult Srl

(57) **Abstract**

Method for identifying and tracking a furniture panel, comprising the step of applying, by laser engraving, a first identification code on the panel.

The method comprises also the steps of applying an undercoat paint on the panel, and reading, by means of a scanner device, the panel-related information comprised in the first identification code. After the step of reading the first identification code, the method comprises a step of applying a finishing topcoat paint on the panel. The panel-related information previously read by the scanner device is saved to a memory medium and then used to create a second identification code to be applied, by means of ink invisible to the naked eye, on the panel.

## Description

### Field of the invention

The present invention relates to a method for identifying and tracking furniture panels, e.g. within a process of manufacturing such panels.

During the production of furniture panels, it is often necessary to manage a plurality of panels of different sizes, colours and characteristics, depending on the material employed, the intended application, the customer's requirements, etc.

This variability makes logistic operations very difficult to handle and has led to the introduction of systems for identifying and tracking furniture panels during the production process and also afterwards, e.g. during the assembly process or service interventions.

### Background art

Several solutions have been proposed so far to overcome the above-described problem.

For example, prior-art document EP 1780621 A1 describes a method for producing furniture panels that, in order to make the panels identifiable, uses adhesive tags comprising, for example, a bar code or an RFID chip. Such adhesive tags contain also data related to the panel and/or to the production process, and can be read by suitable bar code readers or RFID scanners.

Patent publication EP 2065149 A1 shows a method for marking wooden panels by roll stamp, inkjet or laser beam printing. The marking is read by a suitable optoelectronic device, and is preferably applied on the short side of the panels, i.e. the thickness of stacked panels, e.g. in order to mark a whole batch of panels; however, in the same prior-art document it is stated that the marking can also be applied on the main, or planar, surface of the panels.

Prior-art document DE 102010029261 A1 illustrates a method for the production of furniture panels, wherein a laser beam is used to mark the edge of a panel in order to provide it with a durable and order-specific marking.

Patent publication WO 2014/154714 A1 illustrates a wooden panel comprising an RFID tag installed on a surface of the panel to make it identifiable during the production process.

Patent publication EP 2942740 A2 illustrates a method for producing wooden panels, wherein panel marking occurs using an ink invisible to the naked eye and comprising magnetically active particles that can be read by a suitable device. Patent publication US 2003/0192412 A1 illustrates a method for marking wooden panels, which uses an ink invisible to the naked eye and a suitable optical system, e.g. an ultraviolet-ray illumination system, for reading the same.

Prior-art document RU 2786490 C2 illustrates a method for identifying wood-based panels, which involves the insertion of a certain amount of metal powder as an identification element, which is then detected by suitable X-ray equipment.

Patent publication US 2023/0256774 A1 illustrates a method for manufacturing a furniture panel, which comprises a layer decorated with printed motives and a transparent layer that covers said layer decorated with printed motives.

Patent publication US 2024/0129424 illustrates a method for decorating wooden panels, which uses a transparent primer, on which decorations are printed.

The solutions currently known in the art suffer from some important drawbacks. In particular, panel marking by engraving, e.g. laser engraving, does not allow the panels to be identified after they have been coated with a paint layer.

The most common solution to this problem involves the use of adhesive labels to be applied to the panels. However, such labels have to be removed prior to the panel painting steps, and this implies that, in this case as well, during a significant part of the production process the panels remain lacking any element useful to identify them.

Other solutions involve the use of RFID chips, resulting in higher panel production costs.

Other solutions involve the use of magnetic and/or metallic coatings, which increase the complexity of the process and hence the production costs.

Lastly, those solutions which utilize inks invisible to the naked eye do not allow for panel identification during the initial steps of preparing the raw panel, when smoothing cycles are carried out.

### Object of the invention

The object of the present invention is to overcome the drawbacks of the prior art. In particular, it is one object of the present invention to provide a method for identifying and tracking a furniture panel which ensures correct panel identification and tracking throughout the panel production cycle.

It is another object of the present invention to provide a method for identifying and tracking a furniture panel which ensures panel identification and tracking both during the initial raw panel preparation cycles and during the subsequent panel painting cycles.

It is a further object of the present invention to provide a method for identifying and tracking a furniture panel which ensures panel identification also while assembling and/or mounting the piece of furniture that comprises the panel and/or while providing after-sale service.

It is another object of the present invention to provide a method for identifying and tracking a furniture panel which does not require the use of complex and costly devices and which does not significantly affect the panel production costs.

It is another object of the present invention to provide a method for identifying and tracking a furniture panel which minimizes material scraps and which makes the panel production cycle more efficient.

It is a further object of the present invention to provide a method for identifying and tracking a furniture panel which can be easily adapted to all different types of materials that can be used for manufacturing the panel.

These and other objects will become apparent and within the grasp of a person skilled in the art, without requiring any inventive effort, from the description that follows.

### Summary of the invention

The following will describe, by way of non-limiting example, some preferred embodiments of the present invention. Other embodiments, although not described herein but conceivable by a person skilled in the art, should also be considered as covered.

The method for identifying and tracking a furniture panel according to the present invention comprises the step of applying, by engraving, a first panel identification code on a first side of the panel. Said first identification code comprises panel-related information.

The method according to the invention further comprises the steps of applying an undercoat paint on the first side of the panel, and reading, by means of a scanner device, the panel-related information comprised in the first panel identification code. After said step of reading the information comprised in the first identification code, the method comprises the step of applying a topcoat paint on the first side of the panel.

The method of the present invention further comprises the step of saving the panel-related information previously read by the scanner device to a storage medium.

The method of the present invention further comprises the steps of creating a second identification code comprising the panel-related information stored in the memory medium, and applying, by means of ink invisible to the naked eye, the second identification code on a second side of the panel.

According to a preferred embodiment, the undercoat paint is a transparent undercoat paint.

According to an embodiment which is alternative to the preceding one, the undercoat paint is a covering undercoat paint.

Preferably, when the undercoat paint is a covering undercoat paint, the step of reading, by means of a scanner device, the panel-related information comprised in the first panel identification code precedes the step of applying the undercoat paint on the first side of the panel.

According to one aspect, the engraving of the first identification code is carried out by mechanical removal of material by means of a tool, e.g. using scratch or micro-percussion marking techniques.

According to one aspect, the engraving of the first identification code is carried out by laser marking.

According to one aspect, if the marking is carried out by means of a laser device, the method of the present invention may envisage the presence of a fume suction device.

According to one aspect, the scanner device is an optical image scanner.

According to one aspect, the first identification code comprises a numerical code, or an alphanumerical code, or a bar code, or a QR code.

According to one aspect, the second identification code comprises a numerical code, or an alphanumerical code, or a bar code, or a QR code.

According to one aspect, a furniture panel according to the invention comprises a top surface and a bottom surface and a thickness. The bottom surface is, generally, that surface which lies on a work surface, whereas the top surface is the surface opposite the bottom surface.

According to one aspect, the first side of the panel corresponds to the top surface, and the second side of the panel corresponds to the bottom surface.

According to an aspect which is alternative to the preceding one, the first side of the panel corresponds to the bottom surface, and the second side of the panel corresponds to the top surface.

According to one aspect, the memory medium is locally connected to the scanner device.

According to one aspect, the memory medium is remotely connected to the scanner device. For example, the memory medium resides on a server remote from the scanner device. Said remotely connected memory medium may be either alternative or additional to the memory medium locally connected to the scanner device. According to one embodiment, the panel-related information also comprises, in addition to a panel identification code, one or more additional pieces of information about, for example, panel dimensions, panel type, panel origin, customer reference codes, information about the processing cycles undergone by the panel, material used, etc.

According to one embodiment, the method for identifying and tracking a furniture panel according to the present invention comprises, after the step of applying, by engraving, the first panel identification code on the first side of the panel, a step of subjecting the first side of the panel to a first smoothing operation, said step being configured to remove a material thickness which is smaller than a depth of engraving of the first identification code. Thus, the smoothing operation will not remove the first identification code, since the engraving is sufficiently deep and the smoothing operation only affects a surface layer of the panel.

According to one embodiment, the method for identifying and tracking a furniture panel according to the invention further comprises a step of drying the undercoat paint on the first side of the panel.

According to one aspect, said step of drying the undercoat paint can be carried out by using several different methods, e.g. by application of ultraviolet rays and/or hot air and/or infrared rays, etc., possibly combined together.

According to a preferred embodiment, the method for identifying and tracking a furniture panel according to the present invention comprises, after the step of drying the undercoat paint on the first side of the panel, a step of subjecting the first side of the panel to a second smoothing operation, said step being configured to remove a material thickness which is smaller than a depth of engraving of the first identification code. In this case as well, therefore, the second smoothing operation will not remove the first identification code, since the engraving is sufficiently deep, i.e. both the first and the second smoothing operations only affect a surface layer of the panel.

According to one embodiment, the method for identifying and tracking a furniture panel according to the present invention comprises, prior to the step of applying, by means of ink invisible to the naked eye, the second identification code on the second side of the panel, a step of applying the covering topcoat paint on the second side of the panel.

According to such an embodiment, the second identification code is visible to the naked eye or to a suitable scanner device when illuminated by a light source having a suitable wavelength.

According to an embodiment which is alternative to the preceding one, in the method for identifying and tracking a furniture panel according to the present invention the step of applying, by means of ink invisible to the naked eye, the second identification code on the second side of the panel is carried out prior to the step of applying the covering topcoat paint on the second side of the panel.

According to such an embodiment, the second identification code is only visible to a suitable scanner device.

According to one embodiment, the method for identifying and tracking a furniture panel according to the present invention comprises, prior to the step of applying the covering topcoat paint on the second side of the panel, the steps of subjecting the second side of the panel to a first smoothing operation, applying an undercoat paint on the second side of the panel, drying the undercoat paint on the second side of the panel, and subjecting the second side of the panel to a second smoothing operation.

According to one embodiment, the first identification code and the second identification code comprise the same panel-related information.

According to an embodiment which is alternative to the preceding one, the first identification code and the second identification code comprise different panel-related information. For example, the second identification code may comprise specific information about the processing cycles already undergone by the panel, or detailed information about the processing cycles that the panel is yet to undergo.

According to one embodiment, the method for identifying and tracking a furniture panel according to the present invention provides for completing both the step of applying an undercoat paint on the first side of the panel and the step of applying a covering topcoat paint on the first side of the panel prior to applying an undercoat paint on the second side of the panel.

According to an embodiment which is alternative to the preceding one, the method for identifying and tracking a furniture panel according to the present invention provides for completing both the step of applying an undercoat paint on the first side of the panel and the step of applying an undercoat paint on the second side of the panel prior to applying a covering topcoat paint on the first side of the panel.

According to one embodiment, the method for identifying and tracking a furniture panel according to the present invention envisages that the step of applying, by engraving, the first panel identification code on the first side of the panel is preceded by the steps of applying a tag comprising panel-related information on the first side of the panel, reading, by means of the scanner device, the panel-related information comprised in the tag, saving the panel-related information to the memory medium, creating the first identification code comprising the panel-related information stored in the memory medium, and removing the tag from the first side of the panel.

According to one aspect, the tag is an adhesive tag.

### Brief description of the drawings

The following description will refer to the accompanying drawings, provided merely by way of non-limiting example, wherein:
- Figure 1 shows a flow chart of a first embodiment of the invention;
- Figure 2 shows a flow chart of a second embodiment of the invention.

### Detailed description of some preferred embodiments of the invention

In the following description, expressions such as "right", "left", "over", "under", "upper", "lower", "horizontal", "vertical", "previous", "next", and the like, may be used merely for illustration purposes to refer to particular arrangements of elements shown in the annexed drawings, without however conveying any limitation whatsoever.

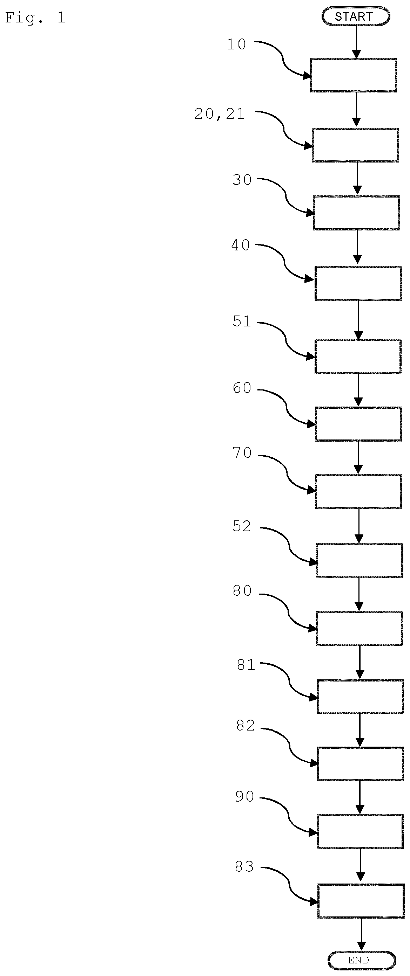

With reference to Fig. 1, the following will describe a first embodiment of the method for identifying and tracking a furniture panel according to the present invention, which comprises a cutting step 10 in which the panel, e.g. a panel made of natural wood or similar materials (MDF, natural chipboard, or chipboard coated with melamine sheet, paper, veneer sheet, etc.), is subjected to a cutting operation during which it is cut to size by a panel saw. The panel dimensions may vary widely depending on specific customer requirements.

Subsequently, during an optional panel edging step 20, an edging machine applies wooden or plastic edges to the lateral surfaces, or edges, of the panel.

After the edging step 20, which may optionally include an edge smoothing sub-step 21, a first panel identification code is applied, by engraving, on the top side of the panel.

The engraving step 30 is carried out by a laser marking device, e.g. a CO₂ laser device or an Nd:YAG solid-state laser device. The choice of the device to be used will depend on the material of the panel.

The first identification code consists of, for example, a bar code, a QR code, or the like.

The step of engraving 30 the first identification code may also occur immediately after the cutting step 10, i.e. prior to the edging step 20 and/or prior to the edge smoothing sub-step 21.

Between the engraving step 30 and the edging step 20 there may also be an optional step 40 of intermediate panel storage.

After the engraving of the first code and the edging operation, the panel is subjected to a first smoothing step 51, which prepares the top side of the panel for the next step 60 of applying an undercoat paint, such as, without however being limited thereto, a transparent undercoat paint or primer, e.g. by roller, spraying, or curtain coating (i.e. through the use of a curtain coater), etc.

The first smoothing is a surface treatment, i.e. it is less deep than the laser engraving, so that the first identification code will still be visible and/or readable after the first smoothing operation.

Likewise, the undercoat paint, e.g. a transparent undercoat paint, does not prevent the first identification code from being read through the paint layer, which remains visible even to the naked eye.

After the application of the undercoat paint, the top side of the panel is subjected to a step of drying 70 the undercoat paint by, for example, ultraviolet radiation, and is then subjected to a second smoothing operation 52.

At the end of the second smoothing operation 52, the first identification code will still be visible.

At this point, the method of the present invention provides a step of reading 80 the panel-related information comprised in the first identification code, e.g. by means of an optical scanner, and a step of saving 81 such information to a memory medium. Subsequently, the method provides a step of applying (90) a topcoat paint on the first side of the panel.

The topcoat paint is normally applied by spraying, e.g. by means of single-head or dual-head spraying robots, or through the use of other application technologies (e.g. roll, curtain coater, etc.).

Since the topcoat paint has, by definition, a covering effect, the first identification code will no longer be visible after the application of the topcoat paint.

In order to overcome this problem, the method of the present invention provides for retrieving the panel-related information from the memory medium and creating a second identification code, e.g. a bar code or a QR code, etc., comprising at least the previously saved panel-related information.

The step of creating the second identification code 82 is preferably carried out prior to the step of applying a covering topcoat paint 90. However, in order to speed up the painting process, it is also possible to deliver the panel to the step of applying the covering topcoat paint 90 immediately after reading 80 the panel-related information comprised in the first identification code, and to execute the step of creating the second identification code 82 simultaneously with the step of applying the covering topcoat paint 90.

At any rate, after the step of applying the covering topcoat paint 90 on the first side of the panel, the method of the present invention provides for executing the step of applying 83, by means of ink invisible to the naked eye, the second panel identification code on the second side of the panel.

The ink invisible to the naked eye is applied by inkjet technology, and the second identification code, which in normal conditions is invisible to the naked eye, can be easily read by means of a scanner device illuminating the second identification code, e.g. with radiation having a suitable wavelength. Once illuminated by said suitable wavelength, the second identification code will be readable by the scanner or even to the naked eye, depending on the ink type in use.

At any rate, when not illuminated by the scanner device, the second identification code will remain invisible to the naked eye, thus not spoiling the appearance of the panel.

During the entire production process, the panels are handled by known dedicated equipment, such as work benches, roller conveyors, belt conveyors, etc.

Suitable loading/unloading robotized arms may also be used in order to move the panels from one work station to the next, and horizontally-pivoted work benches may be used in order to rotate the panels, e.g. for performing the required operations on both sides of the panel.

In particular, the above-described operations carried out on the top side of the panel may also be carried out on the bottom side. When this occurs, the step of applying 83, by means of ink invisible to the naked eye, the second panel identification code on the second side of the panel will concern a surface (i.e. the second side of the panel, or bottom side of the panel) already finished with a layer of topcoat paint. In this case, the method of the present invention is particularly advantageous because it avoids spoiling the panel's appearance, since said second identification code is invisible to the naked eye.

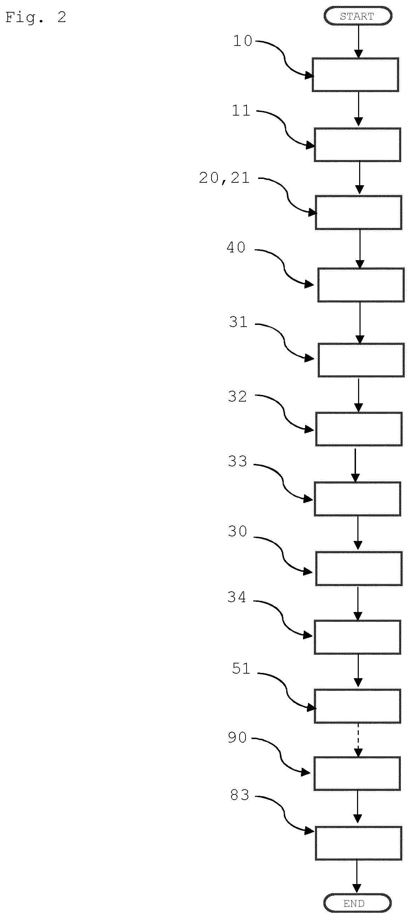

With reference to Fig. 2, the following will describe a second embodiment of the method for identifying and tracking a furniture panel according to the present invention.

The main difference from the first embodiment lies in the fact that, downstream of the cutting step 10, in which the panel is cut to size by a cutting machine, there is a step of applying a tag 11, e.g. an adhesive tag, comprising panel-related information on the first side of the panel.

Said tag may comprise, for example, alphanumerical elements and a bar code, a QR code, or the like.

Once the tag has been applied, the panel is subjected to the optional edging step 20 and to the optional edge smoothing sub-step 21, followed by an optional step 40 of intermediate panel storage.

According to one embodiment, not shown in Fig. 2, the first identification code of the panel is applied by laser engraving on the top side of the panel.

According to such an embodiment, not shown in Fig. 2, the first identification code comprises panel-related information that can be retrieved, for example, from a database residing on a server to which the laser device is connected.

Preferably, such information is synchronized with the information contained in the adhesive tag applied to the panel.

According to the embodiment shown in Fig. 2, the step 30 of laser-engraving the first identification code is preceded by the steps of reading 31, by means of the scanner device, the panel-related information comprised in the tag, saving 32 such information to a memory medium, and creating 33 the first identification code on the basis of the information stored in the memory medium.

In this case, the first identification code may also consist of a simple duplicate of the adhesive tag, with the same information and layout.

After the step of creating 33 the first identification code on the basis of the information stored in the memory medium, said code is laser-engraved. When the step of laser-engraving 30 the first identification code is complete, it is possible to carry out the step of removing 34 the tag from the panel.

The next steps are the same as those described with reference to the first embodiment illustrated in Fig. 1, i.e. a first smoothing operation 51 is carried out on the first side of the panel, and so on up to the step 90 of applying the covering topcoat paint and the step of applying 83, by means of ink invisible to the naked eye, the second panel identification code on the second side of the panel.

### List of references

- 10: panel cutting step
- 11: step of applying an adhesive tag
- 20: edging step
- 21: edge smoothing sub-step
- 30: step of laser-engraving the first identification code
- 31: step of reading the tag
- 32: step of saving the tag information to a memory medium
- 33: step of creating the first identification code on the basis of the information comprised in the tag
- 34: step of removing the tag
- 40: step of intermediate panel storage
- 51: first smoothing operation
- 52: second smoothing operation
- 60: step of applying the undercoat paint
- 70: drying step
- 80: step of reading the panel-related information comprised in the first identification code
- 81: step of saving the panel-related information comprised in the first identification code to the memory medium
- 82: step of creating the second identification code 82 on the basis of the panel-related information comprised in the first identification code and stored in the memory medium
- 83: step of applying, by means of ink invisible to the naked eye, the second identification code
- 90: step of applying the covering topcoat paint

## Claims

1. Method for identifying and tracking a furniture panel, comprising the steps of applying (30), by engraving, a first panel identification code on a first side of the panel, the first identification code comprising panel-related information; applying (60) an undercoat paint on the first side of the panel;
reading (80), by means of a scanner device, the panel-related information comprised in the first panel identification code; and then applying (90) a topcoat paint on the first side of the panel,
**characterized in that** it further comprises the steps of
saving (81) the panel-related information previously read by the reader device to a storage medium;
creating (82) a second identification code comprising the panel-related information stored in the storage medium, and
applying (83), by means of ink invisible to the naked eye, the second identification code on a second side of the panel.

2. Method for identifying and tracking a furniture panel according to claim 1, wherein
after the step of applying (30), by engraving, the first panel identification code on the first side of the panel, the method further comprises the step of subjecting (51) the first side of the panel to a first smoothing operation, said step being configured to remove a material thickness which is smaller than a depth of engraving of the first identification code.

3. Method for identifying and tracking a furniture panel according to claims 1 or 2, further comprising the step of
drying (70) the undercoat paint on the first side of the panel.

4. Method for identifying and tracking a furniture panel according to claim 3, further comprising, after the step of drying (70) the undercoat paint on the first side of the panel, the step of
subjecting (52) the first side of the panel to a second smoothing operation, said step being configured to remove a material thickness which is smaller than a depth of engraving of the first identification code.

5. Method for identifying and tracking a furniture panel according to any one of claims 1 to 4, wherein
the step of applying (83), by means of ink invisible to the naked eye, the second identification code on the second side of the panel is preceded by the step of
applying (90) the topcoat paint on the second side of the panel.

6. Method for identifying and tracking a furniture panel according to claim 5, wherein the step of
applying (90) the topcoat paint on the second side of the panel is preceded by the steps of
subjecting (51) the second side of the panel to a first smoothing operation; applying (60) an undercoat paint on the second side of the panel;
drying (70) the undercoat paint on the second side of the panel, and subjecting (52) the second side of the panel to a second smoothing operation.

7. Method for identifying and tracking a furniture panel according to any one of claims 1 to 6, wherein the undercoat paint is a transparent undercoat paint.

8. Method for identifying and tracking a furniture panel according to any one of claims 1 to 7, wherein the first identification code and the second identification code comprise identical panel-related information.

9. Method for identifying and tracking a furniture panel according to any one of claims 1 to 8, wherein the panel-related information comprises one or more pieces of information about the panel dimensions and/or the panel type and/or the customer reference number and/or the processing cycle and/or the material used.

10. Method for identifying and tracking a furniture panel according to any one of the preceding claims, wherein
the step of applying (30), by engraving, the first panel identification code on the first side of the panel is preceded by the steps of
applying (11) a tag comprising panel-related information on the first side of the panel;
reading (31), by means of the scanner device, the panel-related information comprised in the tag;
saving (32) the panel-related information to the storage medium;
creating (33) the first identification code comprising the panel-related information stored in the storage medium, and
removing (34) the tag from the first side of the panel.
